# EUROPEAN PATENT APPLICATION

(11) **EP 2 805 816 A1**
(43) Date of publication of application: **26.11.2014**
(21) Application number: 13738923.5
(22) Date of filing: 17.01.2013
(51) Int. Cl.: B32B 7/02, B32B 27/00, C09K 3/10

(54) **LAMINATE**

(30) Priority: 17.01.2012 JP 2012006890
(71) Applicant: Sika Technology AG, 6340 Baar (CH)
(72) Inventor: YAMADA, Shunsuke, 254-0021 Kanagawa (JP)
(74) Representative: Sika Patent Attorneys
(86) International application number: PCT/JP2013/050765
(87) International publication number: WO 2013/108821

(57) **Abstract**

The present invention relates to a hexahedron-type layered product having a top surface, a bottom surface and four side surfaces, which contains: a first layer; and a second layer which has a deformability higher than that of the first layer, wherein at least one of the side surfaces is formed by only the first layer. In accordance with the present invention, even if the layered products, each being formed by a layer which has a smaller deformability and another layer which has a larger deformability, are stored for a long period of time, for example, in a stacked manner, the protrusion of the layer which has a larger deformability from the side surfaces of the layered product can be controlled or prevented, and the integration of the layered products themselves or adhesion of the layered products to a package container can be reduced or prevented.

## Description

### TECHNICAL FIELD

Priority is claimed on Japanese Patent Application No. 2012-6890, filed on January 17, 2012, the content of which is incorporated herein by reference.

The present invention relates to a layered product, and in particular, relates to a layered product which can reduce or prevent deformation under storage for a long period of time.

### BACKGROUND ART

Conventionally, a gum-based foamed material fills a cavity in a motor vehicle body in order to satisfy requirements for noise-reducing performance in a vehicle interior or the like. Such a gum-based foamed material is generally formed by adhering an unfoamed thermosetting foamable sheet, in which a foaming agent, a curing agent (vulcanizing agent) and the like are added to a diene-based gum, to an interior wall of a hollowed part of a steel plate for a motor vehicle body, which constitutes the aforementioned cavity in a motor vehicle body, and thermosetting and foaming the sheet, for example, in a dry-heating step on an electrodeposition coating line or the like. The aforementioned thermosetting foamable sheet usually has an adhesive layer in order to prevent dropping of the sheet from the steel plate for a motor vehicle body after the sheet is adhered to the aforementioned hollow part.

Such a thermosetting foamable sheet with an adhesive layer is described in, for example, Japanese Examined Patent Application, Second Publication No. H07-119399, and is in a form of a general cuboid.

### Prior Art Documents

### Patent Documents

Patent Document 1: Japanese Examined Patent Application, Second Publication No. H07-119399

### SUMMARY OF INVENTION

### Technical Problems

The aforementioned thermosetting foamable sheets with adhesive layers are produced, subsequently packed in a stacked manner and stored in a warehouse or the like until they are used. For this reason, if they are left for a long period of time, the adhesive layers may be protruded from the side surfaces of the thermosetting foamable sheets by means of weight bearing from the upper side, resulting in the integration of the sheets with the adjacent sheets or the adhesion of the sheets to the package container. Thereby, the handling properties may be degraded.

The aforementioned problems are generally observed not only in the aforementioned thermosetting foamable sheets with adhesive layers, but also in layered products formed by layers having a smaller deformability and layers having a larger deformability. In particular, if an article is mounted on a layered product, there is a potential inconvenience such as the protrusion of the layer having a larger deformability from the side surfaces of the layered product due to increased load caused by adding the weight of the aforementioned article to the weight of the layered product itself. The aforementioned tendency increases as the applied period of load increases. In particular, the tendency is remarkably observed in the case of storing the layered products in a stacked manner in a warehouse or the like.

The present invention has been made in view of the problems of the aforementioned prior art. An objective of the present invention is to provide a layered product which is formed by a layer having a smaller deformability and another layer having a larger deformability, in which even if the layered products are stored in a stacked manner for a long period of time, the protrusion of the layers having a larger deformability from the side surfaces of the layered products can be prevented or reduced, and the inconvenience of the layered products being mutually integrated or of the layered products adhering to the package container is reduced or prevented.

More particularly, the present invention has an objective to provide a layered product in which, for example, in the case where the layer having a smaller deformability is a thermosetting foamable sheet and another layer having a larger deformability is an adhesive layer, even if the aforementioned layered products are stored in a stacked manner for a long period of time, the protrusion of the adhesive layers from the side surfaces of the layered products can be prevented or reduced, and inconveniences are reduced or prevented in that the layered products are mutually integrated or the layered products adhere to the package container.

### Technical Solution

The objective of the present invention can be achieved by: a hexahedron-type layered product having a top surface, a bottom surface and four side surfaces, including:
a first layer; and
a second layer which has a deformability higher than that of the first layer,
wherein at least one of the side surfaces is formed by only the first layer.

Two of the aforementioned side surfaces are preferably formed by only the first layer. In addition, two of the aforementioned side surfaces may be facing each other.

Three of the aforementioned side surfaces are preferably formed by only the first layer.

All of the aforementioned side surfaces are preferably formed by only the first layer.

In addition, in the layered product of the present invention, the surface of the second layer forms a part of the bottom surface, and at least a part of the peripherals of the bottom surface is preferably formed by only the first layer.

Two of the peripherals of the aforementioned bottom surface are preferably formed by only the first layer. In addition, two of the aforementioned peripherals may be facing each other.

Three of the aforementioned peripherals of the bottom surface are preferably formed by only the first layer.

All of the aforementioned peripherals of the bottom surface are preferably formed by only the first layer.

The aforementioned first layer is preferably non-adhesive.

The aforementioned second layer can contain an uncured (unvulcanized) gum. The aforementioned uncured gum may be a diene-based gum.

The aforementioned second layer can further contain an adhesive resin or adhesive resins. The aforementioned adhesive resin is preferably at least one selected from the group consisting of rosin resins, aliphatic petroleum resins, aromatic petroleum resins, aliphatic/aromatic copolymer-based petroleum resins, coumarone resins, phenolic resins and terpene resins.

### Effects of the Invention

In accordance with the layered product of the present invention which is formed by a layer having a smaller deformability and another layer having a larger deformability, even if the layered products are stored in a stacked manner for a long period of time, the protrusion of the layer having a larger deformability from the side surfaces of the layered product can be prevented or reduced. Therefore, even if the layered products are packed in a stacked manner and left for a long period of time, inconvenience in that the layered products are mutually integrated or the layered products adhere to the package container can be reduced or prevented.

In the layered product of the present invention, when two of the aforementioned side surfaces are formed by only the first layer, the protrusion of the second layer having a larger deformability from the aforementioned side surface can be reduced or prevented. In particular, when two of the aforementioned side surfaces are facing each other, a layered product can be easily produced by means of coextrusion.

When three of the aforementioned side surfaces are formed by only the first layer, the protrusion of the second layer having a larger deformability from the aforementioned side surfaces can be furthermore reduced or prevented.

When all of the aforementioned side surfaces are formed by only the first layer, the protrusion of the second layer having a larger deformability from the aforementioned side surfaces can be completely reduced or prevented.

In addition, in the layered product of the present invention, when the surface of the second layer forms a part of the bottom surface, and at least a part of the peripherals of the bottom surface is formed by only the first layer, the protrusion of the second layer via the aforementioned bottom surface can be reduced or prevented.

When two of the peripherals of the aforementioned bottom surface are preferably formed by only the first layer, the protrusion of the second layer via the aforementioned bottom surface can be furthermore reduced or prevented. In particular, when two of the aforementioned peripherals may be facing each other, a layered product can be easily produced by means of coextrusion.

When three of the aforementioned peripherals of the bottom surface are formed by only the first layer, the protrusion of the second layer via the aforementioned bottom surface can be furthermore reduced or prevented.

When all of the aforementioned peripherals of the bottom surface are formed by only the first layer, the protrusion of the second layer via the aforementioned bottom surface can be completely reduced or prevented.

When the aforementioned first layer is preferably non-adhesive, even if the layered product contacts other layered products or the package container, the possibility of the integration therewith can be reduced. The aforementioned first layer may be thermosetting, and can contain an uncured gum such as a diene-based gum. In addition, the aforementioned first layer may further contain a foaming agent. In this case, the aforementioned first layer can be in the form of a thermosetting foamable sheet.

When the aforementioned second layer contains an uncured gum such as a diene-based gum, the aforementioned second layer can be thermosetting.

When the aforementioned second layer further contains an adhesive resin or adhesive resins which is/are at least one selected from the group consisting of rosin resins, aliphatic petroleum resins, aromatic petroleum resins, aliphatic/aromatic copolymer-based petroleum resins, coumarone resins, phenolic resins and terpene resins, the aforementioned second layer becomes adhesive, and the layered product of the present invention can be adhered to, for example, a steel plate or the like.

Therefore, for example, when the first layer having a smaller deformability is a thermosetting foamable sheet and the second layer having a larger deformability is an adhesive layer, even if the layered products are stored in a stacked manner for a long period of time, the protrusion of the adhesive layers from the side surfaces of the layered products can be controlled or prevented, and the inconvenience in that the layered products are mutually integrated or the layered products adhere to a package container can be reduced or prevented. In addition, operability can be improved without impairing adhesiveness to motor vehicle bodies or a cavity-filling property which is an original purpose of the thermosetting foamable sheet.

### BRIEF DESCRIPTION OF DRAWINGS

[Fig. 1] A general cross-sectional view of a layered product according to one mode of the present invention.
[Fig. 2] A general cross-sectional view of a layered product according to another mode of the present invention.
[Fig. 3] A cross-sectional view of a layered product produced in Example 1.
[Fig. 4] A cross-sectional view of a layered product produced in Example 2.
[Fig. 5] A cross-sectional view of a layered product produced in Comparative Example 1.

### MODES FOR CARRYING OUT THE INVENTION

Hereinafter, modes of layered products are described with reference to the drawings.

The present invention relates to a hexahedron-type layered product having a top surface, a bottom surface and four side surfaces, containing: a first layer; and a second layer which has a deformability higher than that of the first layer, wherein at least one of the side surfaces is formed by only the first layer. The layered product of the present invention has the side surface(s) formed by only the first layer, and for this reason, the protrusion of the second layer having a larger deformability from the aforementioned side surface(s) can be controlled or prevented.

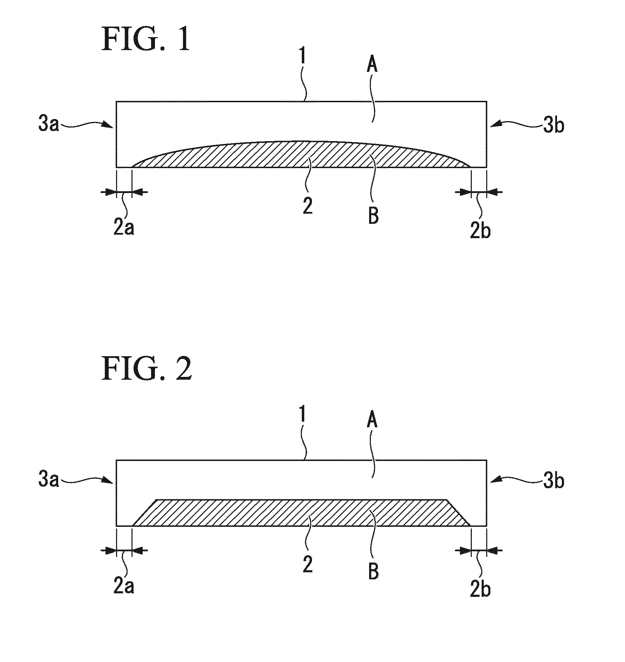

Fig. 1 shows a layered product according to one mode for carrying out the present invention.

In this mode, the layered product of the present invention is in the form of a hexahedron having a top surface 1, a bottom surface 2 and four side surfaces. Fig. 1 shows two side surfaces 3a and 3b for convenience. The remaining two side surfaces, which are not shown in Fig. 1, are present at the upper side and the lower side of the plane of the drawing paper.

The layered product of the mode shown in Fig. 1 is formed by a first layer A and a second layer B which has a deformability higher than that of the first layer A. The "deformability" means a property of deforming in the case of exerting pressure. It is meant that when the same pressure is exerted at the same temperature such as 25°C on each of the first layer A and the second layer B, which is in the form of a plate having the same initial thickness, the same initial width, and the same initial length, the second layer B has a degree of deformation in the width direction or the length direction which is larger than a degree of deformation of the first layer A. For example, the ratio of (a length elongated in the width or length direction of the first layer A)/(a length elongated in the width or length direction of the second layer B) can range from 1/1.1 to 1/10, from 1/1.2 to 1/5, or from 1/1.5 to 1/3. The first layer A preferably has no deformability.

In general, the second layer B has a tensile strain (elongation) which is larger than that of the first layer A. The tensile strain can be measured in accordance with, for example, JIS K7113. Therefore, the elongation determined in accordance with JIS K7113 of the second layer B is preferably larger than that of the first layer A. For example, a ratio of (tensile strain of the first layer A)/ (tensile strain of the second layer B) can range from 1/1.1 to 1/10, from 1/1.2 to 1/5, or from 1/1.5 to 1/3. The first layer A preferably has no tensile strain.

The thickness of the first layer A is not particularly limited, and can range, for example, from 1 mm to 20 mm, preferably ranges from 2 mm to 10 mm, and more preferably ranges from 3 mm to 5 mm. In addition, the thickness of the second layer B is not particularly limited, and can range, for example, from 0.1 mm to 10 mm, preferably ranges from 0.5 mm to 5 mm, and more preferably ranges from 1 mm to 3 mm.

The material for forming the first layer A is not particularly limited, and various inorganic or organic materials can be used therefor. Organic materials are preferable in view of handling properties and easiness of the production, and various resins and gums are more preferable. As the resins, any one of thermoplastic resins and thermosetting resins can be used. As examples of thermoplastic resins, mention may be made of polyolefin, polystyrene, polyvinyl acetate, polyvinyl alcohol, polyvinyl acetal, polyacrylate, polyacrylamide, polyacrylonitrile, polyether, polyvinyl chloride, polyvinylidene chloride, polyester, polyamide, polyimide, polysulfone, and the like. In addition, as examples of thermosetting resins, mention may be made of polyurethane, phenol resin, epoxy resin, urea resin, melamine resin, and the like. For use in filling cavities of the motor vehicle bodies, gums (rubbers) are preferable.

As the gums, any one of cured (vulcanized) gums and uncured (unvulcanized) gums can be used. Cured gums may preferably be used in view of deformability. However, uncured gums are preferable in view of handling properties, and diene-based uncured gums are more preferable. As the diene-based uncured gums, for example, at least one selected from natural gum, isoprene gum, butadiene gum, styrene butadiene gum, and modified gums obtained by modifying the terminals of the aforementioned gums can be used. Styrene butadiene gums are preferable in view of processability and foaming properties. Such diene-based uncured gums can be used alone or in combination of a plurality thereof. When an uncured gum is used as the main compositional material of the first layer A, the first layer A becomes thermosetting.

When an uncured gum is used as the main compositional material of the first layer A, the usage amount of the uncured gum can range, for example, from 20% by weight (mass) to 90% by weight (mass) and preferably range from 30% by weight (mass) to 80% by weight (mass) based on the total weight (mass) of the composition forming the first layer A.

When an uncured gum is used as the main compositional material of the first layer A, the composition forming the first layer A preferably contains a curing agent. The curing agent can be used by appropriately selecting from publicly known ones. As examples thereof, mention may be made of, for example, sulfur or a sulfur-based curing agent such as a thiuram, a dithiocarbamate or the like. As examples of thiurams, mention may be made of tetramethylthiuram disulfide, tetraethylthiuram disulfide, tetrabutylthiuram disulfide, tetramethylthiuram monosulfide, N,N'-dimethyl-N,N'-diphenylthiuram disulfide, dipentamethylenethiuram disulfide, dipentamethylenethiuram pentasulfide, mixed alkylthiuram disulfide and the like. As examples of dithiocarbamates, mention may be made of zinc dimethylthiocarbamate, zinc diethylthiocarbamate, zinc N-ethyl-N-phenyldithiocarbamate, zinc dibenzyldithiocarbamate, and the like. They can be used alone or in combination of two or more types thereof. In particular, in the present invention, tetramethylthiuram monosulfide is preferably used in view of foaming performance.

The usage amount of the curing agent can range, for example, from 0.5% by weight (mass) to 5% by weight (mass) and preferably range from 1% by weight (mass) to 3% by weight (mass) based on the total weight (mass) of the composition forming the first layer A.

A curing (vulcanizing) accelerator can also be used together with the aforementioned curing agent within a range which does not impair the effects of the present invention. As examples of the curing accelerators, mention may be made of, for example, guanidines, thiazoles, sulfenamides, dithiocarbamates, xanthates or salts thereof, aldehyde ammonias, aldehyde amines, thioureas, and the like. The aforementioned thiuram, dithiocarbamate or the like may be used as the curing accelerator. They can be used alone or in combination of two or more types thereof.

The first layer A may further contain a foaming agent. Therefore, in the case of the first layer A containing a foaming agent, when the main forming material of the first layer A is a thermoplastic resin, the first layer A is a thermoplastic foamable sheet; and when the main forming material of the first layer A is a thermosetting resin or an uncured gum, the first layer A is a thermosetting foamable sheet.

The foaming agent can be appropriately selected from the publicly known ones, and used. As examples thereof, mention may be made of, for example, azodicarbonamide (ADCA), azobisisobutyronitrile, barium azodicarboxylate, N,N'-dinitrosopentamethylenetetramine, N,N'-dimethyl-N,N'-dinitrosoterephthalamide, 4,4'-oxybis(benzenesulfonyl hydrazide), hydrazodicarbonamide, paratoluenesulfonyl hydrazide, diphenylsulfone-3,3'-disulfonyl hydrazide, allyl bis(sulfonyl hydrazide), p-toluylenesulfonyl semicarbazide, 4,4'-oxybis(benzenesulfonyl semicarbazide), sodium hydrogencarbonate, ammonium carbonate, anhydrous sodium nitrate, and the like. They can be used alone or in combination of two or more types thereof. In particular, in the present invention, azodicarbonamide is preferably used in view of safety and foaming performance.

The usage amount of the foaming agent can be appropriately determined in accordance with the physical properties of the target foamed product, such as a foaming magnification or the like. For example, the usage amount of the foaming agent can range from 0.5% by weight (mass) to 20% by weight (mass), can preferably range from 1% by weight (mass) to 10% by weight (mass), and can more preferably range from 2% by weight (mass) to 5% by weight (mass) based on the total weight (mass) of the composition forming the first layer A.

Urea may be used as a foaming aid in order to reduce the decomposition temperature of the foaming agent.

In the composition forming the first layer A, various oils, anti-aging agents, coloring agents, inorganic fillers, and other additives, which are conventionally known, may be used within a range which does not impair the effects of the present invention. An adhesive may be blended in the composition forming the first layer A, but the first layer preferably does not have excessive adherence properties, and the blending amount thereof is preferably reduced. In particular, the first layer A is preferably non-adhesive. Therefore, the composition forming the first layer A preferably contains no adhesive.

The materials for forming the second layer B are not particularly limited. The same materials as those described in the first layer A can be used therefor.

In particular, when the first layer A is formed by the uncured gum-based thermosetting composition, the second layer B can also be formed by the same uncured gum-based thermosetting composition, with the proviso that the second layer B has a deformability higher than that of the first layer A. Thereby, the first layer A can be strongly integrated with the second layer B.

Therefore, as the uncured gum used in the second layer B, a diene-based uncured gum is preferable. As the diene-based uncured gum, for example, at least one selected from natural gum, isoprene gum, butadiene gum, styrene butadiene gum, and modified gums obtained by modifying the terminals of the aforementioned gums can be used. Styrene butadiene gums are preferable in view of processability and foaming properties. Such diene-based uncured gums can be used alone or in combination of a plurality thereof.

When the second layer B is formed by the uncured gum-based thermosetting composition, the aforementioned composition can contain the aforementioned curing agent, and curing accelerator, and the like, in the same manner as described in the first layer A.

The second layer B can further contain an adhesive resin or resins in order to exhibit adhesion properties. The adhesive resin can be appropriately selected from the publicly known ones and used. For example, at least one selected from the group consisting of rosin resins, aliphatic petroleum resins, aromatic petroleum resins, aliphatic/aromatic copolymer-based petroleum resins, coumarone resins, phenolic resins and terpene resins can be used therefor. They can be used alone or in combination of two or more types thereof. The adhesive resin preferably has a softening point ranging from 60°C to 150°C.

The usage amount of the adhesive resin can be appropriately determined in accordance with a degree of the desirable adhesion properties. For example the amount can range from 1% by weight (mass) to 40% by weight (mass), preferably range from 5% by weight (mass) to 30% by weight (mass), and more preferably range from 1% by weight (mass) to 20% by weight (mass) based on the total weight (mass) of the composition forming the second layer B.

In the composition forming the first layer B, various oils, anti-aging agents, coloring agents, inorganic fillers, and other additives, which are conventionally known, may be used within a range which does not impair the effects of the present invention.

The composition forming the first layer A and the composition forming the second layer B can be produced by mixing and kneading the aforementioned components by means of a conventionally known method with a kneader, an internal mixer, a twin-roller kneader, or the like, in the present invention.

In the embodiment shown in Fig. 1, two side surfaces 3a and 3b of the layered product of the present invention are formed by only the second layer A. In other words, the contacting surface of the first layer A and the second layer B does not cross the side surfaces 3a and 3b, or alternatively, the side surfaces 3a and 3b are formed by the first layer A, and the second layer B is not exposed to the side surfaces 3a and 3b. Therefore, even if the layered products shown in Fig. 1 of the present invention are stored in a stacked manner for a long period of time and thereby a large load is exerted thereon, the second layer B does not protrude from the side surfaces 3a and 3b.

In addition, in the embodiment shown in Fig. 2, two facing peripherals 2a and 2b of the bottom surface 2 are formed by only the first layer A. In other words, the contacting surface of the first layer A and the second layer B only crosses the bottom surface 2. Namely, the surface of the second layer B forms a part of the bottom surface 2, but the peripherals of the bottom surface 2 are shielded by the first layer A, and the surface of the second layer B cannot reach the edges of the side surfaces 3a and 3b. Therefore, even if the layered products shown in Fig. 1 of the present invention are stored in a stacked manner for a long period of time and thereby a large load is exerted thereon, the second layer B does not protrude through the edges of the side surfaces 3a and 3b from the bottom surface 2.

The width of the peripheral 2a and the width of the peripheral 2b may be the same or different. The width of the peripherals 2a and 2b is not particularly limited, and can range, for example, from 1 mm to 20 mm, and preferably ranges from 3 mm to 15 mm, and more preferably ranges from 5 mm to 10 mm.

In the embodiment shown in Fig. 1, the contacting surface of the first layer A and the second layer B is continuous. The cross-section thereof can be a part of the circular arc. The contacting surface of the first layer A and the second layer B may have a folding point (an indifferentiable acute point as a corner of a rectangle).

Fig. 2 shows a layered product according to another mode for carrying out the present invention. The embodiment shown in Fig. 2 is the same as the embodiment shown in Fig. 1, with the exception that the contacting surface of the first layer A and the second layer B has folding points. In the embodiment shown in Fig. 2, the contacting surface of the first layer A and the second layer B is formed by plural flat surfaces, and the cross-section thereof can be, for example, a part of a trapezoid. Even in the embodiment shown in Fig. 2, even if the layered products are stored in a stacked manner for a long period of time and thereby a large load is exerted thereon, the second layer B does not protrude from the side surfaces 3a and 3b, or does not protrude through the edges of the side surfaces 3a and 3b from the bottom surface 2.

The cross-sectional shape of the contacting surface of the first layer A and the second layer B is not limited, and the shapes other than those shown in Fig. 1 or Fig. 2 can also be used. For example, the shape may be a part of a triangular, rectangular, square or ellipsoidal shape. In addition, fine irregularities may be formed on the contacting surface.

The layered products of the present invention shown in Fig. 1 and Fig. 2 can be produced by, for example, using compositions of forming the first layer A and the second layer B, and subjecting the compositions to the publicly known molding processing such as coextrusion molding with a die for multilayer extrusion containing two nozzles, calendar roll forming for the integration by interleaving two sheets with rolls, press molding for the integration by pressing two sheets, or the like. Coextrusion molding is preferable in view of productivity. When the first layer A and the second layer B are formed by a thermosetting composition, molding processing is preferably carried out at a temperature of 80°C or less in order to control the development of curing, decomposition of the foaming agent or the like, although the aforementioned temperature may vary depending on the compositions.

The layered products of the present invention shown in Fig. 1 and Fig. 2 are formed by two layers of the first layer A and the second layer B. An additional layer may be present, for example, on the first layer or between the first layer and the second layer, if necessary. For example, the aforementioned additional layer can be formed by coextrusion molding with a die for multilayer extrusion containing three nozzles.

The layered products of the present invention contain a mode in which two adjacent side surfaces are formed by only the first layer, in addition to the mode in which two facing side surfaces are formed by only the first layer. Thereby, for example, the layered products can be suitably arranged on the corner of a package container or the like. The layered product of this type can be produced by, for example, press molding for the integration by pressing two sheets.

The layered products of the present invention contain a mode in which three side surfaces are formed by only the first layer. Thereby, the protrusion of the second layer from the side surfaces can be furthermore reduced. The layered product of this type can be produced by means of, for example, press molding for the integration by pressing two sheets or alternatively coating one of the side surfaces present at the vertical direction of the plane of drawing paper of the layered product shown in Fig. 1 or Fig. 2 with the same composition as the composition forming the first layer.

The layered products of the present invention also contain a mode in which all four side surfaces are formed by only the first layer. Thereby, the protrusion of the second layer from the side surfaces can be completely controlled. The layered product of this type can be produced by means of, for example, press molding for the integration by pressing two sheets or alternatively coating two of the side surfaces at the vertical direction of the plane of paper of the layered product shown in Fig. 1 or Fig. 2 with the same composition as the composition forming the first layer.

### INDUSTRIAL APPLICABILITY

The present invention can be applied to any one of layered products formed by a layer which has a smaller deformability and another layer which has a larger deformability, and inconvenience derived from the protrusion of the layer which has a larger deformability during storage for a long period of time can be reduced or prevented.

When a layered product of the present invention has, for example, the first layer having a smaller deformability which is a thermosetting foamable sheet, and the second layer having a larger deformability which is an adhesive layer, the layered product can be in the form of a thermosetting foamable sheet with an adhesive layer. The aforementioned thermosetting foamable sheet with an adhesive layer forms a foamed material exhibiting an acoustic absorption effect by, for example, adhering the sheet to an interior wall of a hollow part such as a cavity inner part of a steel plate of a motor vehicle body, and subsequently, foaming and curing the sheet by appropriately heating it. Thereby, a noise-reducing property in an interior space of a motor vehicle can be enhanced. Therefore, the thermosetting foamable sheet with an adhesive layer which is one of the modes of the present invention can be used as a cavity filler for a motor vehicle body.

### EXAMPLES

Hereinafter, the present invention is described in detail on the basis of Examples and Comparative Examples. It should be understood that the present invention is not limited to these Examples.

The components shown in Table 1 described below were mixed and kneaded by means of an open kneader to prepare a thermosetting foamable composition A and an adhesive material B. The numerical values shown in Table 1 are based on % by weight (mass).

**Table 1**

| | Thermosetting foamable composition A | Adhesive material B |
|---|---|---|
| Styrene-butadiene gum | 35 | 40 |
| Petroleum resin | 5 | 15 |
| Naphthene-based oil | 20 | 20 |
| Heavy calcium carbonate | 30 | 20 |
| Tetramethylthiuram disulfide (curing agent) | 2 | 1 |
| N-cyclohexyl-2-benzothiazole sulfenamide | 1 | 1 |
| Azodicarbonamide (foaming agent) | 5 | 2 |
| Urea | 2 | 1 |

| | | |
|---|---|---|
| Styrene-butadiene gum: Nipol 1502, manufactured by ZEON CORPORATION Naphthene-based oil: Diana Process Oil NP 24, manufactured by Idemitsu Kosan Co., Ltd. | | |

### Example 1

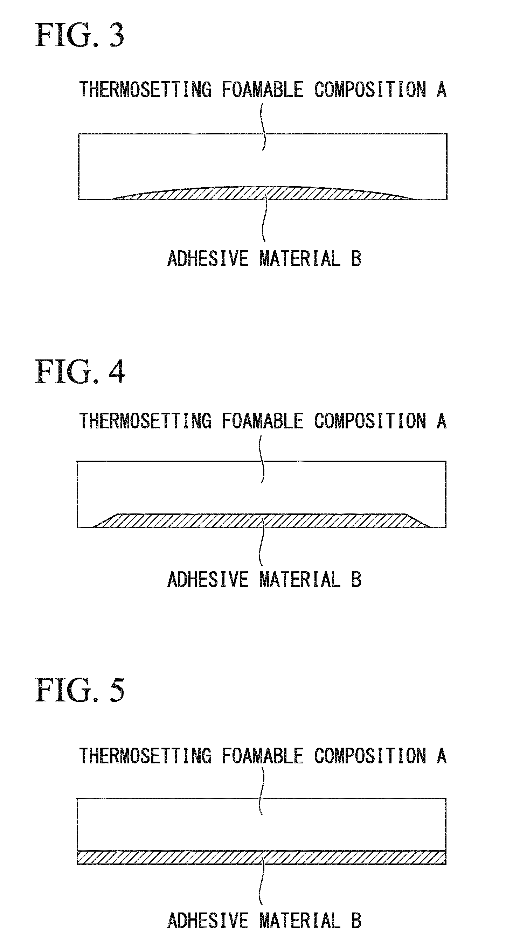

A thermosetting foamable sheet with an adhesive layer having a cross section shown in Fig. 3, in the form of a belt having a width of 30 mm, a thickness of 3 mm and a length of 200 mm, was produced by using a thermosetting foamable composition A and an adhesive material B by means of coextrusion molding using a die for multilayer extrusion.

### Example 2

A thermosetting foamable sheet with an adhesive layer having a cross section shown in Fig. 4, in the form of a belt having a width of 30 mm, a thickness of 3 mm and a length of 200 mm, was produced by using a thermosetting foamable composition A and an adhesive material B by means of coextrusion molding using a die for multilayer extrusion which was different from the die used in Example 1, in the same manner as that described in Example 1.

### Comparative Example 1

A thermosetting foamable sheet with an adhesive layer having a cross section shown in Fig. 5, in the form of a belt having a width of 30 mm, a thickness of 3 mm and a length of 200 mm, was produced by using a thermosetting foamable composition A and an adhesive material B by means of coextrusion molding using a die for multilayer extrusion which was different from the die used in Example 1 or Example 2, in the same manner as that described in Example 1.

### Evaluation

Ten sheets of the aforementioned thermosetting foamable sheets with an adhesive layer obtained in each of Example 1, Example 2, and Comparative Example 1 were laminated. The obtained laminates were arranged side by side in parallel with a gap of 10 mm between the adjacent laminates in a package container, and were stored for 6 months at room temperature. After 6 months, each of the layered products was observed. As a result, no protrusion of the adhesive material B from the side surfaces could be observed in Example 1 and Example 2, and the outer appearance thereof did not change and was good. On the other hand, the protrusion of the adhesive material B from the side surfaces was observed in Comparative Example 1, and the adjacent sheets adhered to each other.

As described above, in the layered products of Example 1 and Example 2, the side surfaces were formed by only the aforementioned thermosetting foamable composition A, and thereby, the protrusion of the aforementioned adhesive material B from the side surfaces could be prevented. Therefore, the layered products of Example 1 and Example 2 could be stored for a long period of time while maintaining the shapes thereof. On the other hand, the layered product of Comparative Example 1 was not appropriate for storage for a long period of time since the adhesive material B flew out from the side surfaces over time.

## Claims

1. A hexahedron-type layered product having a top surface, a bottom surface and four side surfaces, comprising:
a first layer; and
a second layer which has a deformability higher than that of the first layer,
wherein
at least one of the side surfaces is formed by only the first layer.

2. The layered product according to Claim 1, wherein two of the side surfaces are formed by only the first layer.

3. The layered product according to Claim 2, wherein two of the side surfaces are facing each other.

4. The layered product according to Claim 1, wherein three of the side surfaces are formed by only the first layer.

5. The layered product according to Claim 1, wherein all of the side surfaces are formed by only the first layer.

6. The layered product according to any one of Claims 1 to 5, wherein the surface of the second layer forms a part of the bottom surface, and at least a part of the peripherals of the bottom surface is formed by only the first layer.

7. The layered product according to any one of Claims 1 to 5, wherein two of the peripherals are formed by only the first layer.

8. The layered product according to Claim 7, wherein two of the peripherals are facing each other.

9. The layered product according to any one of Claims 1 to 5, wherein three of the peripherals of the bottom surface are formed by only the first layer.

10. The layered product according to any one of Claims 1 to 5, wherein all of the peripherals of the bottom surface are formed by only the first layer.

11. The layered product according to any one of Claims 1 to 10, wherein the first layer is non-adhesive.

12. The layered product according to any one of Claims 1 to 11, wherein the second layer comprises an uncured gum.

13. The layered product according to Claim 12, wherein the uncured gum is a diene-based gum.

14. The layered product according to Claim 12 or 13, wherein the second layer further comprises an adhesive resin or adhesive resins.

15. The layered product according to Claim 14, wherein the adhesive resin is at least one selected from the group consisting of rosin resins, aliphatic petroleum resins, aromatic petroleum resins, aliphatic/aromatic copolymer-based petroleum resins, coumarone resins, phenolic resins and terpene resins.
